# FASCICULE DE BREVET EUROPEEN

(11) **EP 0 430 792 B1**
(45) Date de publication et mention de la délivrance du brevet: **29.12.1993**
(21) Numéro de dépôt: 90403354.5
(22) Date de dépôt: 27.11.1990
(51) Int. Cl.: B60R 16/02

(54) **Perfectionnement aux dispositifs de commande multiflexée d'un ensemble d'organes électriques d'un véhicule automobile**
Verbesserung für Multiplex-Steuergeräte für eine Anordnung elektrischer Elemente in einem Kraftfahrzeug
Improvement of multiplexed control devices for a unit of electrical elements in a motor vehicle

(30) Priorité: 27.11.1989 FR 8915553
(43) Date de publication de la demande: 05.06.1991
(73) Titulaire: VALEO VISION, 93000 Bobigny (FR)
(72) Inventeur: Segaud, Daniel, F-75012 Paris (FR); Depardieu, Dominique, F-93406 Saint-Ouen Cedex (FR)
(74) Mandataire: Martin, Jean-Jacques

(56) Documents cités:
- EP-A- 0 217 762
- DE-A- 2 809 763
- FR-A- 2 154 209

## Description

La présente invention concerne d'une façon générale les dispositifs de commande d'organes électriques, notamment dans des véhicules automobiles, et plus particulièrement la commande multiplexée d'une pluralité de tels organes électriques.

Bien que l'ensemble du texte qui suit fasse référence à l'application de l'invention à des lampes d'éclairage d'un véhicule, l'homme de l'art comprendra qu'elle s'applique également à la commande multiplexée d'organes électriques tout à fait quelconques, tels que moteurs, résistances électriques de chauffage, circuits électroniques, etc., à bord d'un véhicule ou non.

Classiquement, un bloc optique, par exemple un bloc de feux arrière de véhicule, comporte une pluralité de feux (position, stop, clignotant, recul, antibrouillard arrière) dont les lampes sont toutes reliées à une masse commune et sont chacune alimentés par un conducteur s'étendant entre la borne d'alimentation de la lampe et un commutateur ou interrupteur spécifique situé sur le tableau de bord.

Ainsi un bloc de cinq feux nécessite pour l'alimentation des diverses lampes cinq conducteurs d'alimentation spécifiques, de section suffisante pour acheminer les courants d'alimentation, pouvant atteindre typiquement 2 ampères.

On a développé récemment un dispositif de commande dite multiplexée d'un groupe de feux dans lequel une ligne d'alimentation unique arrive au bloc de feux, tandis qu'une ligne de commande achemine un signal à faible courant contenant des consignes d'allumage ou d'extinction de chacun des feux. Un circuit électronique spécialisé de décodage ou démultiplexage est chargé de reconnaître les consignes contenues dans ces signaux et de commander en conséquence des moyens interrupteurs, tels que relais ou de préférence semi-conducteurs de puissance, pour sélectivement allumer ou éteindre les lampes de chacun des feux.

Dans la technique connue (par exemple dans le brevet DE-A-2 809 763), le module de décodage et les semi-conducteurs de puissance sont intégrés en un ensemble unique, soit incorporé au bloc de feux, soit sous forme d'une unité séparée située dans le véhicule à proximité dudit bloc.

Un inconvénient principal de cette solution connue réside dans l'impossibilité pratique de réaliser un ensemble standard unique pour les divers types de blocs de feux de véhicules. En effet, entre les véhicules de bas de gamme et ceux de haut de gamme, notamment, le nombre de feux ou de projecteurs dans un bloc optique avant ou arrière, et les fonctions à réaliser, varient assez largement.

En outre, le module de décodage doit être conçu spécialement pour pouvoir supporter l'environnement sévère du point de vue thermique causé par la dissipation de chaleur dans les interrupteurs de puissance.

La présente invention vise à pallier les inconvénients de la technique antérieure et propose à cet effet un dispositif de commande d'un ensemble d'organes électriques, notamment dans un véhicule automobile, du type comprenant pour un groupe de tels organes un module de décodage recevant un signal électrique contenant des consignes d'excitation et de désexcitation des organes électriques du groupe et créant des signaux de commande à partir desdites consignes, et un ensemble d'interrupteurs commandés par lesdits signaux de commande et montés chacun entre une ligne d'alimentation électrique commune et un organe électrique respectif du groupe, caractérisé en ce que les interrupteurs commandés sont montés à proximité de chacun des organes électriques respectifs du groupe et en ce que le module de décodage est logé dans un boîtier séparé des interrupteurs commandés.

Préférentiellement, les interrupteurs commandés sont montés sur ou dans des moyens de liaison avec lesdits organes.

L'invention concerne également un moyen de liaison pour un dispositif tel que défini ci-dessus, caractérisé en ce qu'il comprend un élément d'adaptation apte à coopérer mécaniquement avec un élément de connexion prédéfini d'un organe électrique commandé par le dispositif, ledit élément d'adaptation étant solidaire avec un module d'interrupteur commandé, le moyen de liaison permettant simultanément le montage de l'organe électrique dans le dispositif et la mise en circuit de l'interrupteur commandé.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels:
la figure 1 est une vue d'ensemble schématique d'un dispositif selon la présente invention,
les figure 2a et 2b sont des vues de parties de détail du dispositif de la figure 1,
la figure 3 est une vue en perspective d'un premier type de sous-ensemble d'un dispositif selon l'invention,
la figure 4 est une vue en perspective d'un second type de sous-ensemble d'un dispositif selon l'invention,
la figure 5 est une vue en perspective selon une autre orientation du sous-ensemble de la figure 4 et d'une partie d'un porte-lampes associé,
la figure 6 est une vue en coupe transversale du porte-lampes et du sous-ensemble de la figure 5 et d'une lampe, dans un état monté,
la figure 7 est une vue en perspective d'un troisième type de sous-ensemble d'un dispositif selon l'invention et d'une partie d'un porte-lampes associé,
la figure 8 est une vue en perspective d'un quatrième type de sous-ensemble d'un dispositif selon l'invention et d'une partie d'un porte-lampes associé,
la figure 9 est une vue en coupe transversale du porte-lampes et du sous-ensemble de la figure 8 et d'une lampe, dans un état monté,
la figure 10 est une vue en coupe d'un sous-ensemble selon un cinquième type,
la figure 11 est une vue en coupe perpendiculairement à la coupe de la figure 10,
la figure 12 est une vue en coupe d'un sous-ensemble selon un sixième type,
la figure 13 est une vue en coupe perpendiculairement à la coupe de la figure 12,
la figure 14 est une vue en coupe d'un sous-ensemble selon un septième type, et
la figure 15 est une vue en coupe perpendiculairement à la coupe de la figure 14.

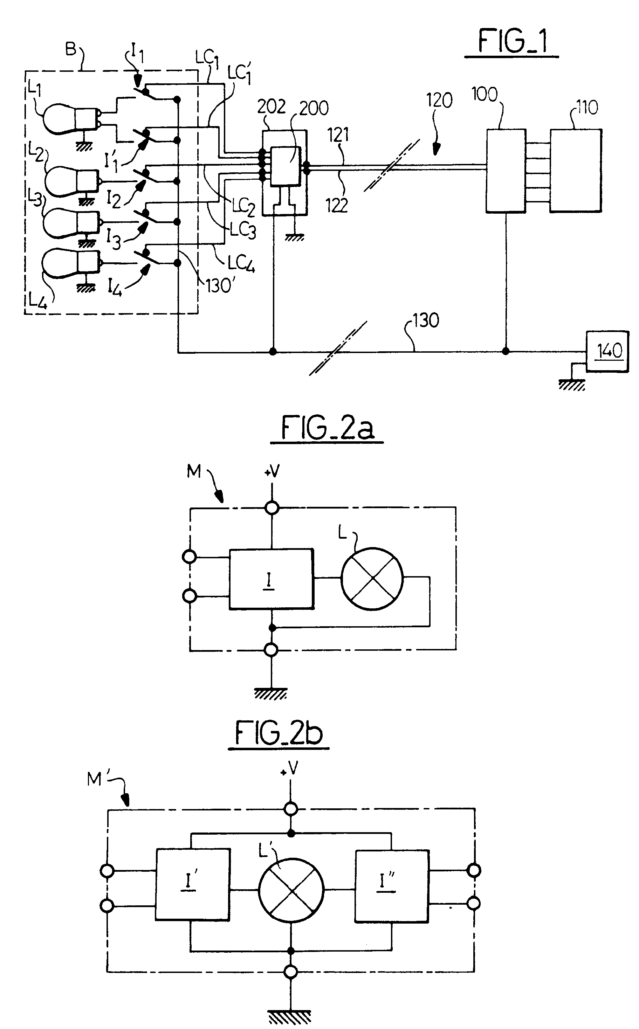

En référence tout d'abord à la figure 1, on a représenté un bloc optique arrière de véhicule automobile, globalement indiqué en B, qui comprend quatre lampes L1, L2, L3, L4. La lampe L1 est une lampe à deux filaments pour les fonctions "feu de position" et "feu stop". Les lampes L2 à L4 sont par exemple des lampes de feu clignotant, de feu de recul et de feu antibrouillard arrière, respectivement. On ne va pas décrire les moyens optiques (miroirs, globes, filtres colorés, etc..) servant à former les faisceaux correspondants, ces moyens étant bien connus dans la technique et ne faisant pas partie directement de l'objet de la présente invention.

Les lampes sont de préférence montées, de façon classique, sur un porte-lampes commun (non représenté) comportant des circuits découpés ou circuits imprimés d'alimentation et des moyens de fixation des lampes dans des douilles dans leurs positions appropriées, les bornes de masse de chacune des lampes étant reliées en permanence à une masse commune.

Un dispositif d'encodage ou de multiplexage 100, situé par exemple dans la région du tableau de bord du véhicule, est relié à un ensemble de commutateurs, sélecteurs et/ou interrupteurs de commande (non représentés individuellement) prévus sur ledit tableau de bord et destinés à la commande par l'utilisateur de l'allumage et l'extinction des feux, cet ensemble étant schématiquement indiqué en 110.

En fonction des états des divers organes de commande de l'ensemble 110, le module d'encodage 100 engendre sur un bus 120 constitué par une paire de conducteurs 121, 122 un signal électrique multiplexé représentatif des états respectifs desdits organes et, en conséquence, des consignes d'allumage et d'extinction des diverses lampes du bloc optique.

Ce bus 120, ainsi qu'une ligne d'alimentation unique 130 acheminant par exemple une tension de +12 volts continus fournie par une batterie 140, sont amenés jusqu'au voisinage du bloc optique B. (Il est à noter que, dans le cas d'un dispositif destiné à commander non seulement l'allumage et l'extinction des lampes d'un bloc optique, mais également d'autres dispositifs électriques devant être commandés à distance, par le conducteur ou par un automatisme quelconque, le bus 120 et la ligne d'alimentation 130 parcourent l'ensemble des points du véhicule où se trouvent de tels dispositifs électriques).

Le dispositif selon la présente invention comprend tout d'abord un module de décodage ou démultiplexage 200 qui est abrité dans un boîtier 202 situé à l'extérieur du bloc optique proprement-dit mais de préférence à proximité de celui-ci. Ce module de décodage, réalisé par exemple sous la forme d'un circuit intégré spécialisé unique, alimenté par le +12 volts présent sur la ligne 130, comprend une entrée de réception du signal engendré sur le bus 120 par le module d'encodage 100 et un ensemble de sorties de commande (au nombre de cinq dans le présent exemple) auxquelles sont reliées cinq lignes de commande respetives LC1, LC1', LC2, LC3 et LC4 pour la commande des diverses lampes du bloc optique B.

Le bloc optique B comprend, sur un support approprié (non représenté sur la figure 1) et au voisinage de chacune des lampes, des interrupteurs commandés, de préférence sous la forme de composants de puissance à semi-conducteurs.

Deux premiers interrupteurs commandés I1 et I1' sont associés à la lampe L1 à deux filaments, tandis qu'à chaque lampe monofilament L2 à L4 est associé un interrupteur commandé unique, respectivement I2 à I4.

Chaque interrupteur comprend une borne d'entrée de courant, une borne de sortie de courant et une borne d'entrée de signal de commande.

Les bornes d'entrée de courant de chacun des interrupteurs commandés sont reliées en commun à la ligne d'alimentation 130.

Les bornes de sortie de courant sont reliées aux bornes positives respectives des lampes associées (aux deux bornes positives des filaments respectifs de la lampe L1 pour les composants I1 et I1')

Les bornes d'entrée de signal de commande des composants I1, I1', I2, I3 et I4 sont quant à elles respectivement reliées aux lignes de commande LC1, LC1', LC2, LC3 et LC4.

De façon préférée, les composants de puissance sont montés, de façon éventuellement amovible (par enfichage ou analogue), sur le porte-lampes du bloc optique, à proximité de chaque emplacement de lampe respectif.

Le dispositif de la présente invention fonctionne de la façon suivante. Lorsque le conducteur agit sur un organe de commande approprié de l'ensemble 110 pour allumer ou éteindre l'un des feux du bloc optique B (et le cas échéant le même feu sur un second bloc optique), le module de codage 100 détecte cette action et modifie le signal de commande multiplexé en conséquence. Immédiatement, le module de décodage détecte ce changement et, en conséquence, commande le composant de puissance concerné par l'intermédiaire de la ligne de commande associée pour fermer ou ouvrir ce composant, selon l'ordre passé, et ainsi allumer ou éteindre la lampe du feu considéré.

Selon une caractéristique essentielle de la présente invention, comme on l'a indiqué ci-dessus, les composants interrupteurs de puissance sont intégrés aux connecteurs des organes électriques, tandis que le module de décodage est abrité dans un boîtier situé à distance. Dans le cas d'un bloc optique, les connecteurs sont définis par le porte-lampes. Cette solution amène plusieurs avantages:
- le module de décodage peut être conçu identiquement pour des blocs optiques ou ensembles d'organes électriques de conceptions tout à fait diverses, avec en conséquence une possibilité de normalisation du module; plus précisément, un module de décodage universel, englobant l'ensemble des fonctions optiques pouvant être implémentées dans des blocs optiques arrière (sans qu'aucun surcoût substantiel ne soit engendré), peut être utilisé avec des blocs optiques de natures et de degrés de sophistication très variables;
- en montant les composants de puissance dans le bloc optique, on limite leur nombre strictement au nombre de fonctions optiques à remplir dans le bloc optique considéré, avec une économie substantielle due au fait que ces composants sont relativement coûteux;
- le module de décodage, physiquement séparé des composants de puissance, est en conséquence protégé des effets thermiques (échauffements et refroidissements) engendrés par lesdits composants; plus généralement, le module de décodage, qui peut être un micro-circuit relativement fragile, peut être protégé comme nécessaire par une conception appropriée du boîtier 202, une telle protection étant beaucoup plus difficile à réaliser au sein de l'environnement sévère du bloc optique;
- l'implantation du dispositif est facilitée : le module de décodage, de dimensions classiquement limitées (typiquement une plaquette de l'ordre de 20 mm x 20 mm) trouve facilement sa place indifféremment dans le bloc optique, sur une surface extérieure de celui-ci ou encore au voisinage du bloc optique; en outre, les composants de puissance, plus encombrants, sont avantageusement répartis sur le porte-lampes du bloc optique, sans accroître excessivement son encombrement;
- la maintenance du dispositif est facilitée; ainsi lors d'une défaillance du module de décodage, il suffit de procéder au remplacement de celui-ci (soit de la partie électronique seule, soit de l'ensemble du boîtier et de son contenu) sans avoir à remplacer les composants de puissance. A cet égard, il peut être avantageux de prévoir des moyens de connexion amovibles entre le boîtier 202 et le bloc optique B, de même qu'entre ledit boîtier et les lignes 120, 130. De même, en cas de défaillance d'un composant de puissance, il suffit de remplacer seulement celui-ci sur le porte-lampes. Cette opération est par ailleurs facilitée si les divers composants de puissance sont montés sur ledit porte-lampes par des connecteurs amovibles, par exemple par simple enfichage. Le remplacement est alors à peu près aussi simple que celui d'une lampe;
- les composants de puissance, par nature relativement robustes, ne souffrent pas d'être situés dans l'environnement sévère du bloc optique; par ailleurs, le porte-lampes sur lequel ces composants sont montés peut avantageusement faire office de radiateur pour évacuer la chaleur dissipée par ceux-ci; une dissipation du même ordre à l'extérieur du bloc optique proprement-dit ne pourraît s'obtenir qu'avec des dispositions spécifiques encombrantes et coûteuses.

Comme on l'a indiqué plus haut, le module de décodage peut grâce à la présente invention être standardisé.

Mais, selon un autre aspect intéressant de la présente invention, on peut également standardiser les composants de puissance, en liaison avec une conception spécifique du porte-lampes.

Plus précisément, trois types de lampes sont actuellement utilisés majoritairement dans les feux arrière de véhicules, à savoir les lampes monofilament de 5 watts, les lampes monofilament de 21 watts et les lampes bi-filament de respectivement 5 watts et 21 watts.

Selon l'invention, on peut réaliser trois types de sous-ensembles modulaires constituant chacun, éventuellement en association avec un aménagement spécifique du porte-lampes, une douille de lampe et comprenant chacun, selon le type de lampe que la douille doit recevoir, un ou deux composants de puissance dimensionnés en fonction de l'intensité qui doit traverser le filament associé, le sous-ensemble étant organisé sous forme d'un module apte à être connecté d'une part à la lampe et d'autre part à la ligne d'alimentation (ligne 130 de la figure 1), la masse et la ligne de commande associée provenant du module de décodage.

Sur la figure 2a est représenté schématiquement un tel module M, qui convient pour une lampe L monofilament. Deux versions d'un tel module sont en pratique réalisées, l'une pour lampe de 5 watts et l'autre pour lampe de 21 watts, le composant de puissance I étant dimensionné en fonction du courant maximal susceptible de circuler dans la lampe.

Sur la figure 2b est illustré un module M' pour une lampe L' à deux filaments, avec deux composants de puissance I' et I'' dimensionnés respectivement pour le filament de 5 watts et pour le filament de 21 watts. Chaque composant de puissance possède sa propre entrée pour la ligne de commande provenant du module de décodage.

Ainsi, lors de la conception d'un bloc optique, on peut utiliser toute combinaison des trois modules de base précités, seuls le nombre et la répartition des modules variant entre des blocs optiques différents. Par ailleurs, ces modules peuvent être réalisés avec un encombrement très réduit et leur implantation sur le corps du bloc optique en est facilité.

De préférence, les composants de puissance sont du type "intelligent". En d'autres termes, ils sont capables non seulement de réagir au signal de commande qui leur est adressé par le module de décodage pour sélectivement alimenter la lampe ou la déconnecter de la ligne d'alimentation, mais ils disposent également d'une aptitude à avertir le module de décodage d'éventuelles défaillances soit de la lampe, soit du composant lui-même. Ainsi, avec cette solution préférée, la ligne de commande entre le module de décodage et le composant est bidirectionnelle dans sa capacité à transmettre des informations.

De même, l'information de défaut reçue du composant de puissance intelligent par le module de décodage doit être transmise au module de codage, intégré à l'unité centrale de la commande multiplexée des fonctions du véhicule; le bus de commande 120 est conçu également pour permettre cet échange bidirectionnel de données entre le module de décodage et l'unité centrale, et plus généralement entre l'ensemble des modules de décodage prévus dans le véhicule et ladite unité centrale.

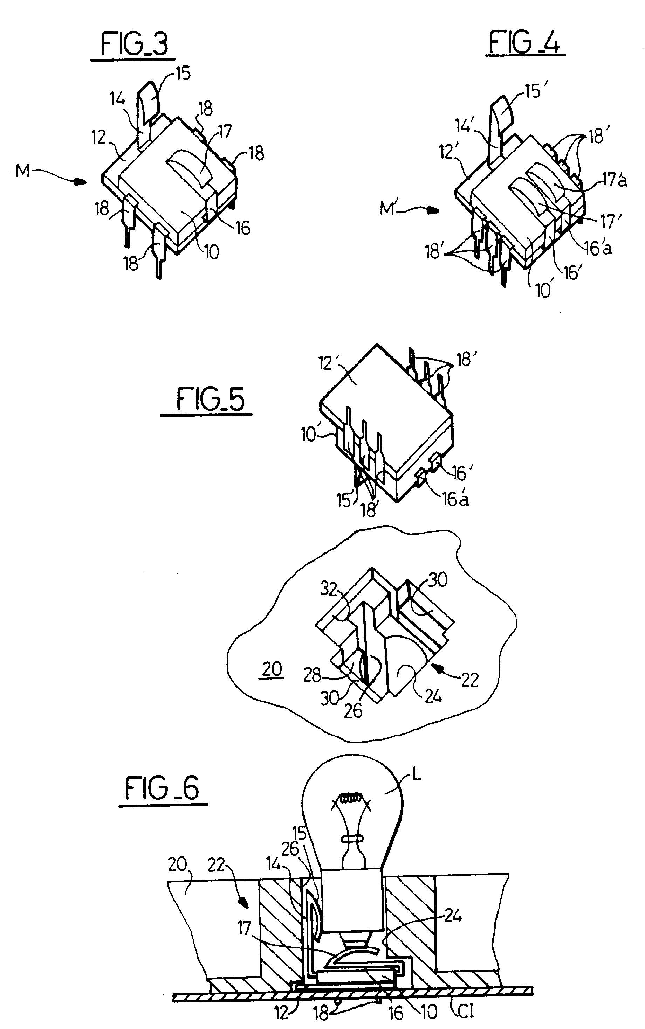

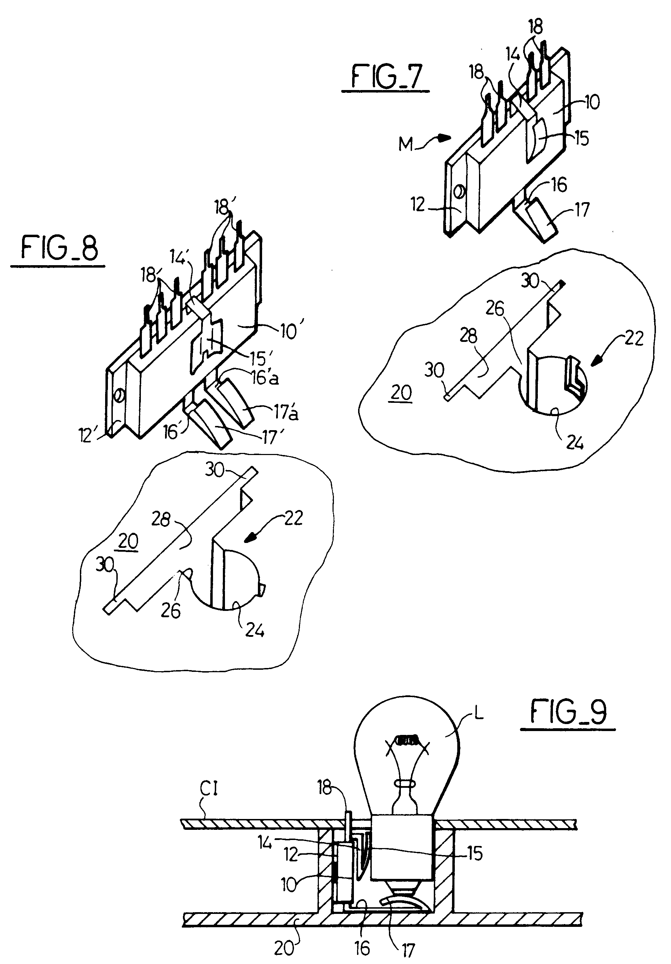

On va maintenant décrire en référence aux figures 3 à 15 des formes de réalisation concrètes d'associations porte-lampes/module interrupteur de puissance conformes à la présente invention. Les figures 3 à 6 et 10 à 13 sont relatives à une disposition transversale du module par rapport à l'axe de la lampe, tandis que les figures 7 à 9 et 14, 15 concernent un montage des modules dans un plan parallèle audit axe.

La figure 3 illustre un premier exemple d'un module M pour une seule lampe, réalisé sous la forme d'un circuit intégré de puissance.

Ce circuit est logé dans un boîtier 10 fixé sur une plaquette de support 12. Un connecteur de masse 14 s'étend vers le haut à partir d'une extrémité du boîtier et comporte une partie de contact 15 repliée vers le bas et bombée destinée à venir en contact avec le culot C de la lampe. Un connecteur de tension positive 16 s'étend à partir de l'autre extrémité du boîtier 10 sensiblement contre la face supérieure de celui-ci, et comporte une partie de contact 17 repliée vers l'arrière, bombée et destinée à venir au contact du plot central d'alimentation de la lampe.

Par ailleurs, quatre broches de connexion 18, correspondant aux quatre bornes représentées sur la figure 2a, s'étendent vers le bas deux par deux respectivement à partir des deux faces latérales du boîtier 10.

La figure 4 illustre une forme de réalisation pratique d'un module M' représenté schématiquement sur la figure 2b. Les références utilisées sur la figure 3 sont ici complétées par un "prime", en désignant des parties identiques ou similaires.

Les différences par rapport au module de la figure 3 sont les suivantes:
- il est prévu côte-à-côte deux connecteurs de tension positive, 16' et 16a', comportant chacune leur partie de contact bombée, 17' et 17a', apte à venir en contact avec un plot de contact respectif d'une lampe à deux filaments;
- il est prévu six broches de connexion 18' correspondant aux six bornes de raccordement de la figure 2b;
- le boîtier 10' abrite les deux interrupteurs de puissance.

Avantageusement, les deux types de modules M et M' des figures 3 et 4 ont des dimensions extérieures identiques, de manière à pouvoir s'adapter dans des logements de conception unique prévus aussi bien pour des lampes monofilament que des lampes bifilament.

La figure 5 illustre le module M' de la figure 4, retourné, ainsi qu'une structure de douille associée 22 formée dans un porte-lampes 20.

La structure 22 comporte un passage cylindrique 24 pour le culot C de la lampe; une rainure 26 longe ledit passage cylindrique 24 pour recevoir le conducteur de masse 14', 15'.

Le passage 24 se termine par un logement essentiellement parallélépipédique 28 pour recevoir le module M'. Deux dégagements latéraux 30 du logement 28 permettent de recevoir les broches latérales 18', tandis qu'un dégagement d'extrémité 32 permet de recevoir la partie du support 12' qui déborde du boîtier 10'. Les aménagements de conception classique (baïonnette ou analogue) pour la fixation de la lampe dans la douille n'ont pas été représentés.

On a représenté sur la figure 6 une partie d'un porte-lampes 20 montrant l'association d'une structure de douille 22 et d'un module M, formant ensemble une douille, d'une lampe monofilament L et d'un circuit imprimé CI.

Le module M et la lampe L ont été mis en place respectivement par l'intérieur et l'extérieur du porte-lampes (par le dessous et par le dessus sur la figure 6), tandis que le circuit imprimé CI est fixé par tout moyen approprié sur la face intérieure du porte-lampes.

Ce circuit imprimé comporte les pistes et perçages appropriés pour assurer le raccordement des divers modules à la masse, à la tension positive et au module de décodage 200. En l'espèce, les extrémités des broches 18 sont introduites dans des perçages et soudées sur la face intérieure (inférieure sur la figure 6) du circuit imprimé.

La figure 7 montre une autre réalisation pratique d'un module M, en association avec une structure de douille 22 de conception spécifique.

Sur cette figure et les suivantes, on a utilisé les mêmes références que sur les figures 3 à 6 pour désigner des parties identiques ou similaires dans leur rôle, avec cependant des différences de disposition et d'organisation générale.

Le circuit de puissance est logé dans un boîtier 10 fixé sur une plaque de support 12, ces éléments ayant une orientation générale parallèle à l'axe de la lampe.

Un connecteur de masse 14 s'étend à partir du bord extérieur du boîtier vers le bas le long de sa face principale, et comporte une partie repliée vers l'extérieur et bombée 15 pour le contact avec le culot C de la lampe.

Un connecteur de tension positive 16 s'étend transversalement à partir du bord intérieur du boîtier, et comporte également une partie 17 repliée vers le boîtier et bombée, pour le contact avec le plot central de la lampe.

Par ailleurs quatre broches 18 correspondant aux quatre bornes de connexion de la figure 2a s'étendent vers l'extérieur à partir du bord extérieur du boîtier 10, par paires de part et d'autre du départ du connecteur 14.

La structure de douille 22 comporte un passage cylindrique 24 pour le culot C de la lampe, un logement essentiellement parallélépipédique 28 pour le module M, un passage étroit 26 entre le passage 24 et le logement 28, et deux encoches latérales 30 du logement 28 pour recevoir les prolongements de la plaque de support 12 de part et d'autre du boîtier 10.

La figure 9 illustre une partie d'un porte-lampes 20 montrant l'association de la structure de douille 22 et du module M, formant ensemble une douille, d'une lampe monofilament L et d'un circuit imprimé CI.

Le circuit CI est ici fixé sur le porte-lampes 20 à du côté extérieur de celui-ci. Le module M et la lampe L se montent également à partir de l'extérieur du porte-lampes.

Dans cet exemple, les extrémités des broches 18 du module M traversent des perçages du circuit imprimé CI et sont soudées sur la face extérieure dudit circuit.

En variante, afin d'éviter toute saillie sur la surface extérieure du circuit imprimé, on peut replier les extrémités des broches 18 à 90° contre la face intérieure du circuit imprimé, et les souder sur cette face intérieure, qui comporte dans ce cas les diverses pistes conductrices.

Selon une autre variante, le circuit imprimé peut être monté contre la face intérieure du porte-lampes (au-dessous de celui-ci sur la figure 9), comme dans le cas de la figure 6, auquel cas les broches 18 s'étendent à partir du bord intérieur du boîtier 10, de part et d'autre du départ du connecteur 16.

La figure 8 montre une réalisation concrète d'un module M' pour lampe bifilament selon le même principe que celui illustré sur la figure 7. Des éléments ou parties identiques ou similaires à ceux de cette figure sont désignés par les mêmes références complétées d'un "prime".

On trouve dans ce cas deux connecteurs de tensions positives 16' et 16a', tandis que les broches 18' sont prévues en deux groupes de trois respectivement de part et d'autre du départ du connecteur de masse 14'.

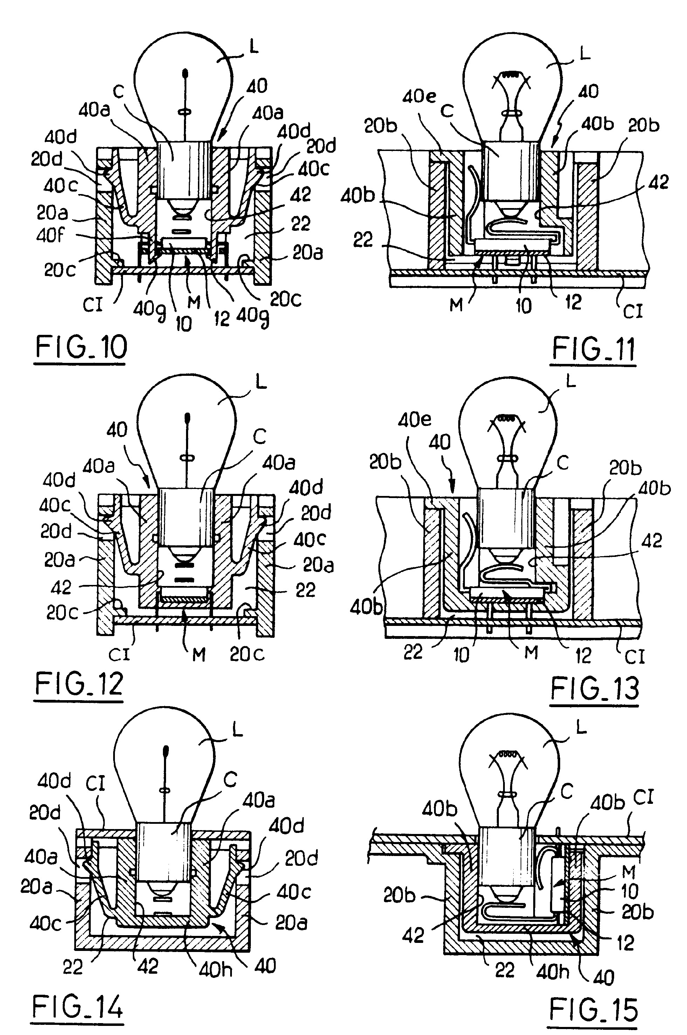

Les figures 10 à 15 illustrent des exemples de réalisation dans lesquels un module d'interrupteur (s) de puissance M ou M' est physiquement associé à une douille 40 qui forme élément adaptateur entre le culot C d'une lampe L et un porte-douilles 20 qui joue le même rôle mécanique que le porte-lampes décrit plus haut, à ceci près qu'il reçoit les lampes par l'intermédiaire des douilles.

Sur les figures 10 et 11, le porte-douilles 20 comporte, pour recevoir une douille 40, une cavité 22 définie par deux parois latérales 20a et deux parois transversales 20b. Le circuit imprimé CI est fixé entre les deux parois latérales, contre des épaulements 20c. La douille 40 comporte un logement central 42 essentiellement cylindrique pour le culot C de la lampe L, défini par deux parois latérales 40a et deux parois transversales 40b. Chaque paroi latérale comporte une patte 40c élastiquement déformable dont une dent 40d en saillie vers l'extérieur peut venir se prendre dans une ouverture 20d formée dans la paroi latérale voisine 20a du porte-douilles 20. Par ailleurs, il est prévu dans la région d'extrémité des parois de la douille opposée au circuit imprimé un épaulement 40e en saillie vers l'extérieur, qui vient s'appuyer sur une surface supérieure de l'une des parois transversales 20b du porte-douille, afin de caler convenablement la douille dans son logement. Le culot C de la lampe L est du type à baïonette, et des gorges appropriées (non illustrées) sont prévues dans les faces intérieures des parois de la douille pour la fixation amovible de la lampe.

Le module interrupteur de puissance M est conçu pour l'essentiel comme décrit plus haut en référence à la figure 3. Il est fixé dans la région de fond de la douille 40 à l'aide de pattes flexibles 40f en saillie à partir de l'extrémité, côté circuit imprimé, des parois de la douille, ces pattes 40f traversant des ouvertures formées dans la plaquette de support 12 du module et comportant des dents 40 g venant s'encliqueter derrière ladite plaque.

On comprend que l'ensemble constitué de la douille 40 et du module M est capable de constituer une pièce normalisée.

Par ailleurs, on note ici, selon un aspect essentiel de l'invention, que l'interrupteur de puissance intégré dans le module M coopère avec un élément d'adaptation, constitué ici par la douille 40, pour assurer à la fois le montage mécanique et les connexions électriques entre un organe électrique devant être sélectivement alimenté (en l'espèce la lampe) et un élément apportant les divers signaux électriques (en l'espèce le porte-douilles muni du circuit imprimé).

La variante de réalisation des figures 12 et 13 diffère de la réalisation des figures 10 et 11 en ce que, pour assurer la fixation du module interrupteur de puissance M et de la douille 40, cette dernière est surmoulée sur ledit module. Ainsi on peut observer que le module est étroitement emprisonné à la base de la douille, ces deux éléments pouvant constituer ici encore une pièce unitaire standard.

Dans la forme de réalisation des figures 14 et 15, le circuit intégré, son boîtier 10 et la plaquette 12 ne sont plus disposés perpendiculairement à l'axe de la lampe, mais parallèlement à celle-ci. La construction de la douille 40, et en particulier de ses moyens de fixation amovible dans le porte-douilles 20, et sensiblement identique à la description qu'on en a faite précédemment, à ceci près qu'elle est fermée à sa base par une paroi de fond 40h et qu'elle est élargie latéralement pour recevoir le module M. Dans ce cas, la fixation mécanique entre le module M et la douille 40 peut être réalisée soit par clipsage à l'aide de dents flexibles, comme dans le cas des figures 10 et 11, soit par surmoulage, comme dans le cas des figures 12 et 13, ou par tout autre moyen approprié (par exemple collage). Par ailleurs, dans cet exemple, le circuit imprimé CI est situé, comme dans le cas de la figure 9, au-dessus du porte-douilles 20, du côté lampes.

Selon une autre variante encore, non illustrée, le boîtier 10 et la douille peuvent être réalisés, préférentiellement par moulage de matière plastique, d'un seul tenant. Dans ce cas, la douille constitue elle-même le boîtier d'encapsulation du circuit à semi-conducteurs incorporant l'interrupteur commandé.

Il est clair que les réalisations des figures 10 à 15 peuvent faire l'objet de nombreuses variantes. En particulier, l'homme de l'art saura effectuer les adaptations nécessaires pour appliquer les concepts de ces réalisations à la commande d'organes électriques autres que des lampes, et notamment des moteurs, et définir des éléments normalisables permettant à la fois le montage mécanique sur un élément de connexion normalisé de l'organe (équivalent au culot pour une lampe) et par ce biais la connexion électrique de l'interrupteur à semi-conducteur.

Ainsi, l'invention peut être utilisée aussi bien pour des feux que pour des projecteurs ou des combinaisons feux/projecteurs.

En outre, dans le cas des blocs optiques arrière, un même module de décodage peut intégrer, outre les commandes des diverses lampes du bloc optique, d'autres commandes électriques à réaliser au voisinage de l'arrière du véhicule, et notamment le verrouillage/déverrouillage de la malle ou du hayon arrière, l'éclairage de la malle ou du coffre, l'éclairage de la plaque d'immatriculation, etc...

Par ailleurs, comme on l'a indiqué plus haut, le dispositif de l'invention peut être utilisé pour la commande multiplexée d'organes électriques quelconques dans un véhicule ou dans tout autre environnement.

## Revendications

1. Dispositif de commande d'un ensemble d'organes électriques (L1-L4), notamment dans un véhicule automobile, du type comprenant pour un groupe de tels organes un module de décodage (200) recevant un signal électrique contenant des consignes d'excitation et de désexcitation des organes électriques du groupe et créant des signaux de commande à partir desdites consignes, et un ensemble d'interrupteurs (I1-I4) commandés par lesdits signaux de commande et montés chacun entre une ligne d'alimentation électrique commune (130) et un organe électrique respectif du groupe, caractérisé en ce que les interrupteurs commandés (I1-I4) sont montés à proximité de chacun des organes électriques respectifs du groupe (L1-L4) et en ce que le module de décodage (200) est logé dans un boîtier (202) séparé des interrupteurs commandés.

2. Dispositif selon la revendication 1, caractérisé en ce que les interrupteurs commandés (I1-I4) sont montés sur ou dans des moyens de liaison avec lesdits organes.

3. Dispositif de commande selon la revendication 2, dans lequel au moins un groupe d'organes électriques consiste en un ensemble de lampes montées dans un bloc optique comportant un porte-lampes commun audit ensemble de lampes, caractérisé en ce que les interrupteurs commandés (I1-I4) sont montés sur le porte-lampes.

4. Dispositif selon la revendication 3, caractérisé en ce que les interrupteurs commandés (I1-I4) sont montés sur le porte-lampes de façon amovible.

5. Dispositif selon l'une des revendications 1 à 4, caractérisé en ce que les interrupteurs commandés (I1-I4) sont des interrupteurs à semi-conducteurs de puissance.

6. Dispositif selon l'une des revendications 3 à 5, caractérisé en ce que le bloc optique comprend un ensemble de modules (M, M'), chaque module formant en association avec les moyens (20) de support de lampes une douille pour une lampe (L, L') de type déterminé et incorporant au moins un interrupteur commandé (I, I', I'') dimensionné en fonction de la puissance dudit type de lampe.

7. Dispositif selon la revendication 6, caractérisé en ce que chaque module comprend un boîtier (10) pourvu d'au moins deux connecteurs (14, 15; 16, 17; 16a, 17a) d'alimentation d'une lampe associée et d'un ensemble de broches (18) pour sa liaison avec le module de décodage et la ligne d'alimentation et en ce que les moyens de support de lampes sont constitués par un porte-lampes unique (20) comportant un ensemble de logements (28) situés au voisinage de passages cylindriques (24) prévus pour les culots (C) des lampes et aptes à recevoir lesdits boîtiers.

8. Dispositif selon l'une des revendications 6 et 7, caractérisé en ce qu'à chaque module est associé un élément normalisé formant douille solidaire avec le module et tenant lieu de moyen d'adaptation mécanique entre le culot d'une lampe et le porte-lampes.

9. Moyen de liaison (M, 40) pour un dispositif selon la revendication 2, caractérisé en ce qu'il comprend un élément d'adaptation (40) apte à coopérer mécaniquement avec un élément de connexion prédéfini (C) d'un organe électrique commandé par le dispositif, ledit élément d'adaptation étant solidaire avec un module (M) d'interrupteur commandé, le moyen de liaison permettant simultanément le montage de l'organe électrique dans le dispositif et la mise en circuit de l'interrupteur commandé.

10. Moyen de liaison (M, 40) selon la revendication 9, caractérisé en ce que l'élément d'adaptation (40) est un élément surmoulé sur le module (M) d'interrupteur commandé.

11. Moyen de liaison (M, 40) selon la revendication 9, caractérisé en ce qu'il est prévu des moyens de fixation mécanique entre l'élément d'adaptation (40) et le module (M).

12. Moyen de liaison (M, 40) selon la revendication 9, caractérisé en ce que l'élément d'adaptation (40) et un boîtier du module (M) sont réalisés d'un seul tenant.

## Patentansprüche

1. Steuergerät für eine Anordnung elektrischer Elemente (L1-L4), insbesondere in einem Kraftfahrzeug, enthaltend für eine Gruppe solcher Elemente ein Decodiermodul (200) zum Empfang eines elektrischen Signals, enthaltend Erregungs- und EntregungsSollwerte für die elektrischen Elemente der Gruppe und mit Erzeugung von Steuersignalen aus den genannten Sollwerten, und eine Anordnung von Schaltern (I1-I4), die durch die genannten Steuersignale gesteuert werden und jeweils zwischen einer gemeinsamen Stromzuleitung (130) und einem entsprechenden elektrischen Element der Gruppe angeordnet sind, **dadurch gekennzeichnet**, daß die gesteuerten Schalter (I1-I4) in Nähe jedes der entsprechenden elektrischen Elemente der Gruppe (L1-L4) angebracht sind und daß das Decodiermodul (200) sich in einem von den gesteuerten Schaltern getrennten Gehäuse (202) befindet.

2. Gerät nach Anspruch 1, **dadurch gekennzeichnet**, daß die gesteuerten Schalter (I1-I4) an oder in Verbindungsmitteln zu den genannten Elementen angebracht sind.

3. Steuergerät nach Anspruch 2, bei dem wenigstens eine Gruppe von elektrischen Elementen aus einer Anordnung von Lampen besteht, die in einem optischen Block montiert sind, der einen gemeinsamen Lampenhalter mit der genannten Lampenanordnung aufweist, **dadurch gekennzeichnet,** daß die gesteuerten Schalter (I1-I4) an den Lampenhaltern angebracht sind.

4. Gerät nach Anspruch 3, **dadurch gekennzeichnet**, daß die gesteuerten Schalter (I1-I4) auf entfernbare Weise am Lampenhalter angebracht sind.

5. Gerät nach einem der Ansprüche 1 bis 4, **dadurch gekennzeichnet,** daß die gesteuerten Schalter (I1-I4) Schalter mit Leistungshalbleitern sind.

6. Gerät nach einem der Ansprüche 3 bis 5, **dadurch gekennzeichnet**, daß der optische Block eine Anordnung von Modulen (M, M') enthält, wobei jedes Modul in Verbindung mit den Lampenträgermitteln (20) eine Fassung für eine Lampe (L, L') einer bestimmten Art bildet und wenigstens einen gesteuerten Schalter (I, I', I'') enthält, der entsprechend der Leistung des genannten Lampentyps dimensioniert ist.

7. Gerät nach Anspruch 6, **dadurch gekennzeichnet**, daß jedes Modul ein Gehäuse (10) enthält, welches mit wenigstens zwei Steckern (14, 15; 16, 17; 16a, 17a) für die Stromversorgung einer zugehörigen Lampe und einer Anordnung von Stiften (18) für die Verbindung mit dem Decodiermodul und der Versorgungsleitung versehen ist, und daß die Lampenträgermittel aus einem einzelnen Lampenhalter (20) bestehen, der eine Reihe von Aufnahmesitzen (28) aufweist, die sich in Nähe von zylindrischen Durchtritten (24) befinden, die für die Sockel (C) der Lampen vorgesehen und zur Aufnahme der genannten Gehäuse geeignet sind.

8. Gerät nach einem der Ansprüche 6 und 7, **dadurch gekennzeichnet**, daß jedes Modul mit einem genormten Element einhergeht, welches eine fest mit dem Modul verbundene Fassung bildet und als mechanisches Anpassungsmittel zwischen dem Sockel einer Lampe und dem Lampenhalter dient.

9. Verbindungsmittel (M, 40) für ein Gerät nach Anspruch 2, **dadurch gekennzeichnet**, daß es ein Anpassungselement (40) enthält, welches dazu geeignet ist, mechanisch mit einem festgelegten Verbindungselement (C) eines durch das Gerät gesteuerten elektrischen Elements zusammenzuwirken, wobei das genannte Anpassungselement fest mit einem gesteuerten Schaltermodul (M) verbunden ist, wobei das Verbindungsmittel gleichzeitig den Einbau des elektrischen Elements in das Gerät und die Einschaltung des gesteuerten Schalters erlaubt.

10. Verbindungsmittel (M, 40) nach Anspruch 9, **dadurch gekennzeichnet**, daß das Anpassungselement (40) ein dem gesteuerten Schaltermodul (M) überformtes Element ist.

11. Verbindungsmittel (M, 40) nach Anspruch 9, **dadurch gekennzeichnet**, daß mechanische Befestigungsmittel zwischen dem Anpassungselement (40) und dem Modul (M) vorgesehen sind.

12. Verbindungsmittel (M, 40) nach Anspruch 9, **dadurch gekennzeichnet,** daß das Anpassungselement (40) und ein Gehäuse des Moduls (M) aus einem Stück gefertigt sind.

## Claims

1. A system for controlling a set of electrical devices (L1-L4), e.g. in a motor vehicle, of the type comprising for a group of such devices a decoding module (200) receiving an electrical signal containing instructions for energization and de-energization of the electrical devices in the group and generating control signals on the basis of said instructions, and a set of switches (I1-I4) controlled by said control signals and each connected between a common electrical power line (130) and a respective electrical device in the group, characterized in that the controlled switches (I1-I4) are mounted in the vicinity of each of the respective electrical devices of the group (L1-L4), and in that the decoding module (200) is housed in a housing (202) which is separate from the controlled switches.

2. A system according to claim **1**, characterized in that the controlled switches (I1-I4) are mounted on or in link means for said devices.

3. A control system according to claim **2**, in which at least one group of electrical devices consists in a set of lamps mounted in a light unit comprising a common lamp carrier for said set of lamps, characterized in that the controlled switches (I1-I4) are mounted on the lamp carrier.

4. A system according to claim **3**, characterized in that the controlled switches (I1-I4) are removably mounted on the lamp carrier.

5. A system according to any one of claims **1-4**, characterized in that the controlled switches (I1-I4) are semiconductor power switches.

6. A system according to any one of claims **3-5**, characterized in that the light unit includes a set of modules (M,M'), each module defining in association with the lamp support means (20) a socket for a lamp (L,L') of given type and incorporating at least one controlled switch (I,I',I'') that is dimensioned as a function of the power of said type of lamp.

7. A system according to claim **6**, characterized in that each module includes a package (10) provided with at least two connectors (14,15 ; 16,17 ; 16a,17a) for powering an associated lamp, and a set of pins (18) for its connection to the decoding module and to the power supply line, and in that the lamp support means are constituted by a single lamp carrier (20) including a set of housings (28) situated in the vicinity of cylindrical passages (24) provided for the bases (C) of the lamps and suitable for receiving said packages.

8. A system according to claim **6** or **7**, characterized in that each module is being associated a standard socket-forming member fixed to the module and constituting mechanical adapter means between the base of a lamp and a lamp carrier.

9. A link means (M,40) for a system according to claim **2**, characterized in that it comprises an adapter member (40) suitable for cooperating mechanically with a predefined connector member (C) for an electrical device controlled by the system, said adapter member being fixed to a controlled switch module (M), the link means serving both to mount the electrical device in the system and to put the controlled switch into circuit.

10. A link means (M,40) according to claim **9**, characterized in that the adapter member (40) is a member overmolded on the controlled switch module (M).

11. A link means (M,40) according to claim **9**, characterized in that mechanical fixing means are provided between the adapter member (40) and the module (M).

12. A link means according to claim **9**, characterized in that the adapter member (40) and a package of the module (M) are integrally formed.
